# EUROPEAN PATENT APPLICATION

(11) **EP 3 798 055 A1**
(43) Date of publication of application: **31.03.2021**
(21) Application number: 20198544.7
(22) Date of filing: 25.09.2020
(51) Int. Cl.: B60P 3/035, B60P 3/40, B65H 49/38

(54) **METHOD AND FRAME FOR TRANSPORTING A CABLE REEL BY MEANS OF A ROAD TRUCK AND TRAILER**

(30) Priority: 27.09.2019 NL 1043396
(71) Applicant: XELLZ Solutions B.V., 1424 RS De Kwakel (NL)
(72) Inventor: Bouwhuis, Petrus Hendrikus Joannes, 2451 CW Leimuiden (NL)
(74) Representative: van Dam, Dirkjan Bernhard

(57) **Abstract**

Method of transporting a cable reel (8) provided with a high-voltage cable (10). The method includes holding the cable reel (8) by means of a frame (6) that is arranged for rotational motion of the cable reel (8) relative to the frame (6). The method also includes, by means of a road truck and trailer that includes a front trailer part and a back trailer part, transporting the frame (6) that holds the cable reel (8). During transporting, the frame (6) is coupled to the trailer so that it connects the front trailer part to the back trailer part in between the front trailer part and the back trailer part.

## Description

The invention relates to a method of transporting a cable reel by means of a road truck and trailer, the cable reel being provided with a high-voltage cable. The invention also relates to a frame that holds a cable reel. The invention further relates to an assembly of a frame and a road truck and trailer, and relates to use of a frame.

Modern advances in the use and generation of sustainable energy, such as solar energy and off-shore wind energy, require transport of increased amounts of electrical energy. Sustainable energy is often stored and further used in electrical form, e.g. by electrical cars. Sustainable energy is also often generated in electrical form. As the generation at a sufficiently large scale requires large area's at land or at sea, generation usually takes place at remote locations. As a result, in view of the increased demand for sustainable electrical energy, there is also a growing demand for transport of electrical energy.

In addition to the increased amounts of generated and used sustainable energy, fluctuations in the generation of sustainable energy can be expected to also lead to increased requirements to the amount of electrical energy that can be transported. Fluctuations in sustainable energy generation are usually larger compared to conventional sources, such as gas or coal. If there is chance of an energy shortage due to such fluctuations, electrical energy may have to be transported from a conventional source, which could be located abroad. Thus, in order to be able to prevent shortages and to ensure stable power conditions, it can be expected that there will be a growing demand for transport of electrical energy as well.

The increased transport requirements for electrical energy can be met by placement of new electrical high-voltage cables. After being manufactured, such cables are usually wounded onto reels (also referred to as drums). One reel can typically accommodate a cable of (more or less than) two kilometer length, and has a considerable size and weight primarily due to the weight of the cable. The distances that are to be covered however typically extend along trajectories of many hundreds of kilometers. This means that a larger number of cable reels are needed to cover the required distances, along which transport of electrical energy is required.

Finding a suitable path for the cables is often difficult, e.g. in view of existing buildings, roads, agricultural areas, and protected nature. In addition to the creation of facilities for receiving the cables, such as trenches, also the actual placement of the cables causes a disturbance. In view of the limited cable length, many construction sites are needed for placing a cable reel provided with a cable, unwinding the cable, and connecting the cable with a previous and subsequent cable along the cable path. Each cable reel has to be transported to a construction site and has to be unloaded at such a site. In addition, the empty reels have to be collected and removed after placement of the cables.

The preparation of the construction sites, the transport of the cable reels to and from the construction sites, and the handling of the cables at such sites, cause a disturbance of the environment. Heavy road trucks are necessary for transport in view of the weight and size of the cables. A construction site, as well as the entrance to it and the exit from it, generally requires a sufficiently reinforced road surface. Moreover, enough area must be available for handling the cable reel and manoeuvring the road truck. Preparing a construction site can thus lead to significant costs. In addition, in populated areas the flow of normal traffic could be disturbed. In remote area's, preparing the construction sites often involves a disturbances of nature. In view of the remote locations of sustainable energy generation facilities, building construction sites in nature is often required.

DE 10 2017 012 072 A1 addresses the problem of disturbances of nature as a result of the construction sites. DE 10 2017 012 072 A1 proposes to use a cable reel with a relatively long cable, to transport the reel on a train wagon or road truck, and to unwind the cable during slow transport of the train wagon or road truck. The cable will be placed along the railway track or along the road, over which the cable reel is transported. While mitigating the problems inherent to the use of the many construction sites, this solution however severely limits the available cable paths. This can be expected to increase the total length of cables needed. Moreover, the solution will interfere with the presence of road exits, railway junctions etc., where special provisions must be taken.

It is an object of the invention to decrease the disturbance caused by transporting cable reels for a high-voltage cable at construction sites from which the cables are placed.

The invention provides a method of transporting a cable reel provided with a high-voltage cable, the method including: holding the cable reel by means of a frame that is arranged for rotational motion of the cable reel relative to the frame; and, by means of a road truck and trailer that includes a front trailer part and a back trailer part, transporting the frame that holds the cable reel; wherein, during transporting, the frame is coupled to the trailer so that it connects the front trailer part to the back trailer part in between the front trailer part and the back trailer part.

The frame holding the cable reel provided with the high-voltage cable can be unloaded at an unloading location, such as a construction site, by decoupling the frame from the front trailer part and the back trailer part. Decoupling can take place after lowering and/or supporting the frame. As the frame is transported in between both trailer parts, unloading can be achieved without using much additional area compared to the area already covered by the truck, trailer, and frame during transporting. This can diminish the disturbance at a construction site. The frame used is designed with a dual purpose. The frame is designed for holding the cable reel in a rotatable manner, so that a high-voltage cable can be wound or unwound. The frame is also designed for transport in between trailer parts.

In an embodiment, the frame holds the cable reel by means of an axle. The axle may be provided in, fixed or rotational, connection to the frame and the cable reel. The axle may be fixed to the frame and may be rotatably connected to the cable reel. Alternatively, the axle may be rotatably connected to the frame and fixed to the cable reel. Thus, in an embodiment, the axle enables the rotational motion of the cable reel relative to the frame. Preferably, the axle is provided in a central portion of opposing frame sides.

The method preferably includes, after transporting the frame to an unloading location, unloading the frame that holds the cable reel at the unloading location, wherein unloading includes decoupling the frame from the front trailer part and the back trailer part. In an embodiment, the unloading includes lowering, preferably in between the front trailer part and the back trailer part, the frame that holds the cable reel by means of equipment comprised by the truck and/or trailer. By using a truck and/or trailer that is provided with equipment for lowering the frame, or, in other words, for moving the frame downwards, the use of heavy external lifting equipment such as external cranes may be omitted.

Thus, preferably, the unloading is carried out without the use of external lifting equipment. This reduces the area, and external equipment (i.e., equipment not comprised by the truck and/or trailer), used for unloading the frame. Optionally, the equipment for lowering the frame comprised by the truck and/or trailer, is also arranged for lifting the frame. Preferably, the equipment comprised by the truck and/or trailer comprises an hydraulic system for lowering, and optionally also for lifting, the frame holding the cable reel provided with the high-voltage cable.

In an embodiment, the method includes, after unloading, unwinding the high-voltage cable from the cable reel by rotating the cable reel with respect to the frame. Preferably, the method includes, during unwinding, by means of the frame supporting the cable reel on a support surface at the unloading location, at a distance from the support surface that allows the rotating of the cable reel. Unwinding is carried out at the unloading location, not during transport. Thus, a frame can be used in a method according to the invention that rotatably holds and supports the cable reel at a distance from the ground surface on which the frame is placed. This enables use of the frame during placement of the cable, without the need for vertically repositioning the frame after unloading. This also reduces the area, and external facilities, used for unloading the frame.

In an embodiment, the method includes moving the frame horizontally away from the trailer in a direction that is transverse to a transportation direction of the trailer to reach an unloading point at the unloading location. Thus, the trailer was moved in the transportation direction in order to reach the unloading point. Preferably, the method subsequently includes, optionally after coupling the front trailer part to the back trailer part, moving the trailer away from the unloading point in, or opposite to, the transportation direction of the trailer to reach the unloading point. The sideward motion of the frame combines a relatively limited use of area with a convenient manner of removing the trailer from the unloading location. For example, driving the truck and trailer opposite to the transportation direction of the truck to reach the unloading point, allows for an unloading location with a relatively small reinforced surface area.

In an embodiment, the unloading point is near a cable receiving facility, such as a trench, that extends in a cable path direction that is transverse to the transportation direction of the truck and trailer to reach the unloading point. Preferably, during transporting, an axis of rotation of the cable reel relative to the frame is oriented along the transportation direction of the trailer. Thus, this embodiment enables having, directly after unloading, the cable reel in an orientation with respect to the trench transverse to the cable path direction at the unloading location. In this way, the cable reel is oriented for unwinding the cable reel directly after unloading. Optionally, the method includes unwinding the cable reel and placing the high-voltage cable in the trench.

In an embodiment, the method includes moving at least one support portion of a frame side relative to a base portion of the frame side. The at least one support portion may preferably be moved from a retracted position of the at least one support portion, to a support position of the at least one support portion. Such movement may be realised after at least part of the transport of the frame, preferably at the unloading location and in particular at the unloading point. The retracted position of the at least one support portion may be configured for transporting the frame. The support position may be configured for supporting the frame. Alternatively, or additionally, the at least one support portion may preferably be moved from the support position of the at least one support portion to the retracted position of the at least one support portion. Such movement may be realised before at least part of the transport of the frame, preferably after the cable (or a portion thereof) is unwound from the cable reel. Preferably, such movement from the support position to the retracted position is realised at the unloading location, in particular at the unloading point.

Such a moveable, preferably pivotable, at least one support portion may enable improving dimensions of the frame during transporting and during supporting. In particular, a lateral extension of the frame during transporting with the at least one support portion in the retracted position, may be less than during supporting with the at least one support portion in the support position.

In an embodiment, the method includes increasing a lateral extent of the frame by moving the at least one support portion of the frame side relative to the base portion of the frame side, preferably before a bottom contact surface of the frame is in contact with a support surface or unloading support element, by which surface or element the frame is supported after unloading.

In an embodiment the method includes including transporting a plurality, preferably an even number, such as four, of the frames to one and the same unloading location, and unloading said frames at the unloading location. In this way, the number of unloading locations can be reduced. After all, by positioning an even number of frames at one and the same location, a cable can be placed from one and the same unloading location in two mutually opposite directions along the cable path. This can approximately halve the number of unloading locations, so that disturbance of nature can be further reduced. Transporting four frames to one and the same unloading location, enables the placement of two parallel cables in opposite directions along the cable path, from one and the same construction site. At crossings or junctions, it may be advantageous to provide an uneven amount (larger than one) of frames holding a cable reel provided with a high-voltage cable. Thus, in this embodiment, a transport method is provided for placing a plurality of frames holding a cable reel provided with a high-voltage cable at one and the same unloading location. Preferably, an axis of rotation of a plurality of the reels that are placed at the one and the same unloading location, are substantially parallel to each other.

In another embodiment, the method includes transporting a single frame to the unloading location, and unloading said frame at the unloading location. Thus, the transport method provided can also be used for placing a single frame holding a cable reel provided with a high-voltage cable at an unloading location.

In an embodiment, the method includes constructing of the frame. This embodiment can also be applied separately, i.e. separate from the transporting. The constructing may include providing two opposing lower frame side parts in order to form parts of opposing sides of the frame; providing, on or in the opposing lower frame side parts, an axle that is directed from one of the opposing lower frame side parts towards another one of the opposing lower frame side parts; providing the cable reel in connection to the axle so that the axle enables rotational motion of the cable reel relative to the frame side parts; optionally providing, on top of the lower frame side parts, upper frame side parts that are supported by the lower frame side parts, and locking the lower frame side parts to the upper frame side parts to form the opposing frame sides; and/or connecting the opposing frame side parts to each other by means of connectors that extend along the cable reel.

A frame that comprises at least two frame side parts at each one of opposing sides of the frame, reduces the need for heavy lifting equipment for positioning the frame. After all, the frame can be moved in parts to a position from which it can be provided with a high-voltage cable and/or where it can be loaded to a trailer. Preferably, in both frame sides, the axle is provided in between the upper and the lower frame side parts. The axle may extend transverse to the opposing frame sides. Thus, in an embodiment, the axle enables the rotation of the cable reel relative to the frame, and is directed from one of the opposing frame sides towards another one of the opposing frame sides.

In an embodiment, the method includes providing the high-voltage cable on the cable reel by rotating the cable reel with respect to the frame while the frame is holding the cable reel. The high-voltage cable may be provided on the cable reel before loading the cable reel. However, alternatively, the cable may be provided on the cable reel after loading the cable reel.

In an embodiment, the method includes loading the frame that holds the cable reel in between the front trailer part and the back trailer part, wherein loading includes coupling the frame to the front trailer part and the back trailer part. Preferably, with the frame positioned in between the front trailer part and the back trailer part, coupling includes moving at least two of the frame, the front trailer part and the back trailer part horizontally towards another one of the frame, the front trailer part and the back trailer part, for coupling the frame to the front trailer part and the back trailer part. Coupling the frame to the trailer parts by horizontal motion instead of lifting the frame on a trailer made of one piece, prevents, or at least reduces, the need for using of heavy external lifting equipment.

Preferably, loading further includes lifting, preferably in between the front trailer part and the back trailer part, the frame by means of equipment comprised by the truck and/or trailer. Preferably, the frame holding the cable reel provided with the high-voltage cable is lifted after the frame is coupled to the front trailer part and the back trailer part. Thus, in an embodiment, the frame, after being positioned in between the trailer parts, is lifted, or, in other words, moved upwards, only after the coupling with both trailer parts. Optionally, the equipment for lifting the frame comprised by the truck and/or trailer, is also arranged for lowering the frame that hold the cable reel provided with the high-voltage cable.

The invention also provides a frame, and further provides use of the frame in a method according to the invention. The frame is arranged for being transported by means of a road truck and trailer that includes a front trailer part and a back trailer part, the frame holding a cable reel that is arranged to be provided with, and preferably is provided with, a high-voltage cable, the frame being provided with opposing frame sides and with connectors that extend along the cable reel and connect the opposing frame sides to each other, wherein the frame is arranged for rotational motion of the cable reel relative to the frame and wherein the frame sides are each provided with frame coupling elements that are arranged to be coupled to the front trailer part or the back trailer part and to connect the front trailer part to the back trailer part, so that the road truck can transport the frame in between the front trailer part and the back trailer part.

The frame thus is designed with a dual purpose. The frame is designed for holding the cable reel in a rotatable manner, so that a high-voltage cable can be wound or unwound. The frame is also designed for transport in between trailer parts. As explained above, the frame can thus be unloaded at a construction site by using a relatively small area and relatively few external equipment. The frame can be used in a method according to the invention, e.g. in a method in an embodiment described herein.

The frame is provided with the frame coupling elements. Each of the trailer parts may be provided with trailer coupling elements that are arranged for coupling with the frame coupling elements. For example, a projecting frame coupling element can be shaped to cooperate with a cavity of a trailer coupling element. Alternatively, or additionally, a projecting trailer coupling element is shaped to cooperate with a cavity of a frame coupling element. Preferably, strength, position, and dimensions of the frame coupling elements and of the trailer coupling elements are arranged for connecting the frame to the front trailer part and/or the back trailer, in between both trailer parts.

In an embodiment, the frame and/or the cable reel is provided with an axle that enables the rotation of the cable reel relative to the frame. Preferably, the axle is directed from one of the opposing frame sides towards another one of the opposing frame sides. The axle may e.g. extend from one of the opposing frame sides to reach another one of the opposing frame sides. Alternatively, the axle may comprise two axle parts that each extend towards an opposing frame side without reaching the opposing frame side.

In an embodiment, each of the opposing frame sides has an upper frame side part and has a lower frame side part that, in use, supports the upper frame side part. Preferably, the axle rests in or on the lower frame side part in between the upper frame side part and the lower frame side part. As a result, the axle may be provided during construction of the frame before the upper frame side parts are provided. A construction of the frame having frame sides that are constructed from multiple frame side parts, makes handling of the frame easier. Hence, less, or at least less heavy, external equipment is needed for handling the frame.

In an embodiment, the frame is arranged for supporting the cable reel by extending below the cable reel and/or below the cable provided on the cable reel, so that the frame can support the cable reel on a support surface with the cable reel and the cable being provided on the cable reel at a distance from the support surface. This allows for rotation of the cable reel relative to the frame supporting the cable reel. In this embodiment the use of support elements during loading or unloading may be omitted when the distance to the surface is large enough (although support elements could still be used in combination with this embodiment). The distance preferably is at least 0.1 meter, e.g. approximately 15 centimeter. A distance that is too large, may negatively impact the transport of the frame, in view of a maximum available space determined by flyovers. Said distance from the support surface preferably is at most 0.2 meter.

Preferably, the frame sides (on the one hand), and the cable reel and/or the cable provided on the cable reel (on the other hand), extend upwards and/or downwards to a similar height. As a result, the combination of frame and cable reel is not unnecessarily high, while providing a strong construction.

In an embodiment, at least one of the connectors, and/or at least part of the frame coupling elements that are provided on the at least one of the frame sides, are positioned near an upper part of the cable reel that is preferably provided with the high-voltage cable. Realising a connection between the frame and the trailer parts relatively far upwards, may increase a stability of the frame during transport.

In an embodiment, at least part of the frame coupling elements extends horizontally from at least one of the frame sides, so that the at least part of the frame coupling elements is arranged for connecting the frame to the front trailer part and/or the back trailer part by horizontal motion. The frame coupling elements may, in use, cooperate with trailer coupling elements that are provided with one or more recesses arranged for receiving the horizontally extending frame coupling elements.

In an embodiment, at least one, and preferably both, of the opposing frame sides has a base portion and has at least one support portion that is moveable, preferably pivotable, with respect to the base portion, wherein the connectors connect the base portion to the opposing frame side. Preferably, the at least one support portion is moveable from a retracted position of the at least one support portion for transporting the frame, to a support position of the at least one support portion for supporting the frame. Preferably, the base portion of the at least one, and preferably both, of the frame sides is provided with the frame coupling elements.

The invention also provides an assembly, wherein the front trailer part and/or the back trailer part is provided with a vertically extending section that, during transport, faces one of the frame sides, the vertical section being provided with trailer coupling elements that are arranged to cooperate with the frame coupling elements.

The invention also provide use of a frame and/or assembly according to the invention in a method according to the invention.

The invention is further illustrated by means of the following figures, wherein:
Figure 1A shows, in an embodiment of the invention, a side view of a road truck and a trailer;
Figure 1B shows a section of figure 1A;
Figure 1C shows a front view of the truck and a part of the trailer of figure 1A;
Figures 2A and 2B show, in a top view, a schematic representation of handling of a frame holding a cable reel provided with a high-voltage cable at an unloading location;
Figure 2C shows a schematic top view of a frame positioning system;
Figures 3A-3E show consecutive steps of constructing a frame that holds a cable reel;
Figure 4 shows a schematic side view of a cable reel and a view, in three different directions, of an upper frame side part and a lower frame side part;
Figure 5 shows a schematic transparent side view of the frame and the cable reel provided with the high-voltage cable;
Figure 6A shows, in a further embodiment of the invention, a perspective view of a frame configured for transport of a cable reel, together with a vertically extending section;
Figure 6B shows a front view of the frame of figure 6A and the vertically extending section of figure 6A;
Figure 6C shows a front view of the frame of figure 6A configured for support of a cable reel, and the vertically extending section of figure 6A;
Figure 7A shows an angled top view of a base portion of a frame side;
Figure 7B shows a perspective view of the base portion of figure 7A; and
Figure 7C shows base portions of opposing frame sides connected by connectors.

As illustrated with reference to the figures, a solution is provided for a specific problem related to the transport and placement of a high-voltage cables provided on a cable reel. A high-voltage cable can be used for transmission of electric power, e.g. generated by a solar energy system or wind energy system (or another power generation source). A high-voltage cable can be typically designed for a voltage of at least 50 kilovolt or at least 100 kilovolt, and/or for at most 600 kilovolt or at most 700 kilovolt, e.g. for approximately 320 kilovolt or approximately 525 kilovolt. When performing such transport and placement, the available space at a construction site is usually limited, as it is desired to limit a disturbance of the environment. In addition, unloading usually takes place at remote locations where soil conditions can be poor. As will be further illustrated below with reference to the figures, various aspects of a transport method for a high-voltage cable reel are disclosed herein. One aspect relates to the use of two separate trailer parts, with the frame transported in between. During transport, the trailer parts are coupled to the frame positioned in between the trailer parts, the frame holding the cable reel provided with the high-voltage cable.

The frame is constructed to enable transport of the frame in combination with the cable reel and high-voltage cable. As will be further illustrated below, this way of transporting is beneficial when unloading the frame at a construction site. It is also beneficial during loading at a manufacturing facility. An aspect of the invention relates to the frame, which is designed not only for holding the cable reel during winding the cable on the cable reel, during transport, and during unwinding of the cable from the cable reel, but also for coupling the frame to the trailer parts and for supporting the cable reel on a support surface when unloaded at the construction site. Thus, a frame is provided wherein the cable reel can rotate for winding the cable on, or unwinding the cable from, the cable reel. The frame can also be coupled to the front trailer part and the back trailer part, so that it connects the front trailer part to the back trailer part.

The frame has a bottom contact surface that is, in use, after unloading of the frame from the truck and trailer, in contact with a support surface (or unloading support element) by which the frame is supported after unloading. Such a support surface can e.g. be formed by a reinforced road surface at an unloading location, such as a construction site. During transporting, the frame connects the front trailer part and the back trailer part in between the front trailer part and the back trailer part. According to an aspect of the invention, during unloading and preferably also during transport, the bottom contact surface of the frame is not supported by the trailer. During transport, the bottom contact surface of the frame is substantially free from trailer parts that support the frame. Thus, the frame can be unloaded without lifting the frame from the trailer.

According to a further aspect, there is a reduced need for using external equipment arranged for lifting and/or lowering the frame, when loading, transporting and/or unloading the frame containing the cable reel provided with the cable. Such lifting and lowering poses requirements to the loading location and the unloading location. At a loading location (such as a cable manufacturing facility), there could e.g. be insufficient space for operating heavy lifting equipment for lifting the frame containing the reel with cable. At an unloading location (often a location at which the cable is to be placed in a trench), there could e.g. be insufficient support for placing such lifting equipment due to soft soil. Moreover, the use of heavy lifting equipment is relatively expensive. According to this aspect, a modular construction of the frame may be used, and/or lifting equipment provided on, or otherwise comprised by, the truck and/or trailer.

The frame preferably is provided with a driving unit, that is arranged for controlling the rotation of the reel during winding or unwinding of the cable. The driving unit may e.g. comprise an electric motor for rotating the axle that is fixed to the cable reel. Additionally, or alternatively, the frame and/or cable reel can each be provided with a communication unit such as a GPS-emitter. This enables central control and administration of the location of the frame and/or reel, in a central control facility. In this way, transporting the frames can be more efficient. The GPS-emitter for example enables keeping track in a reliable way of the number of frames unloaded at construction sites. Optionally, the communication unit is also arranged for emitting further information to the central control facility. For example, the driving unit may be arranged for determining a coverage of the cable reel by the high-voltage cable, e.g. by counting rotations or measuring a weight of the cable reel provided with the cable. The control unit may e.g. be arranged for determining whether the cable reel is empty or full. Emitting by means of the control unit this information to the central control facility, can further improve the planning of the transport of the frames to the construction sites, and/or the placement of the cables along the cable path.

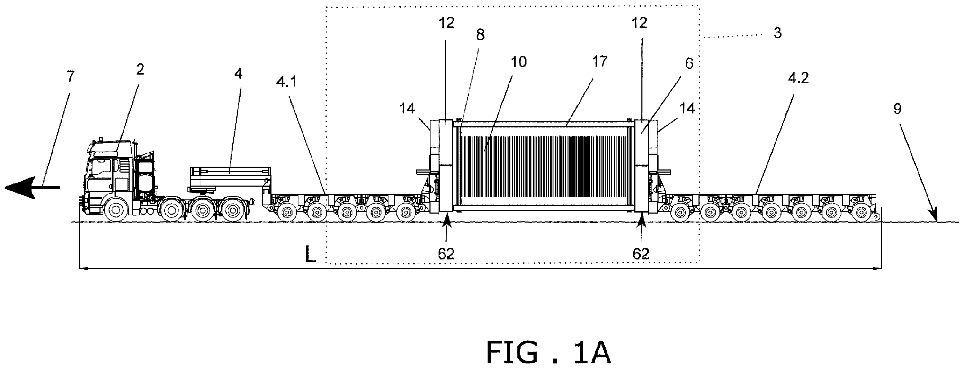

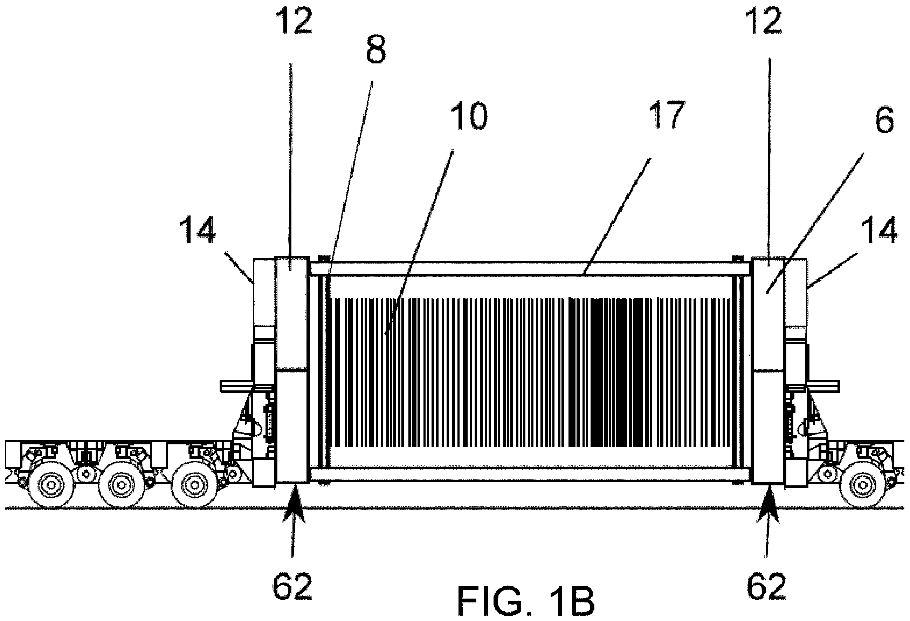

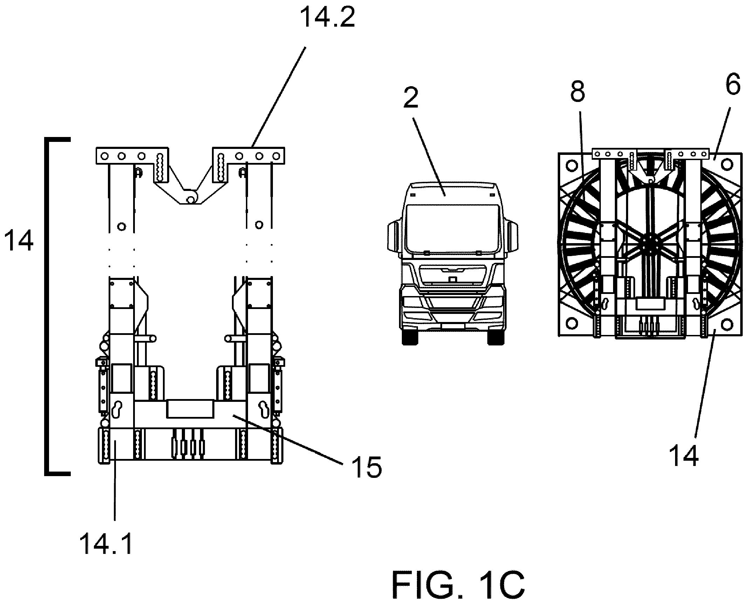

Figure 1A shows, in an an embodiment of the invention, a side view of a road truck 2 and trailer 4. The trailer 4 includes a front trailer part 4.1 and a back trailer part 4.2. Figure 1B shows a section 3 of figure 1A. Figure 1C shows a front view of the truck 2 and a part of the trailer 4. A frame 6 (shown transparent in figure 1C) is provided in between the front trailer part 4.1 and the back trailer part 4.2. Thus, figures 1A-1C show, in an embodiment, an assembly of the frame 6, and the road truck 2 and trailer 4. During transport, a length L of the assembly may be in a range between 30 meter and 50 meter, e.g. approximately 40 meter. The frame 6 is coupled to the trailer so that it connects the front trailer part 4.1 to the back trailer part 4.2. The frame 6 holds a cable reel 8. The cable reel 8 is provided with a high-voltage cable 10. The frame 6 is arranged for rotational motion of the cable reel 8 relative to the frame 6. Transporting the frame 6 in between the front trailer part 4.1 and the back trailer part 4.1 enables reducing a disturbance of the natural environment at the unloading location for the frame.

During transporting in the normal driving direction 7 of the road truck and trailer, the front trailer part is positioned in front of the back trailer part. The front trailer part 4.1 however is not necessarily at the front of the trailer, but can be preceded by another trailer part. Likewise, the back trailer part 4.2 is not necessarily the last part of the trailer during transporting in the normal driving direction, but can be trailed by another trailer part. Moreover, the terms (road) truck and trailer are to be interpreted broadly, and are to be understood as covering a wide range of vehicles that are suitable for driving on a road surface. The truck and trailer depicted in figure 1A can pivot relative to each other. Alternatively, the truck and trailer could be fixed to each other so that pivoting is prevented. The truck and trailer may e.g. form one integral vehicle with a front section of the vehicle being regarded as the truck, and the back section of the vehicle being regarded as the trailer.

The frame 6 has frame sides 12 that are located at opposing ends of the frame. The frame sides 12 are connected by means of connectors 17 that extend along the cable reel. The connectors 17 may e.g. be made of steel. Instead, another material may be used that can withstand the pressure and tension that may occur as a result of the weight of the high-voltage cable. Such a cable may e.g. have an outer diameter in the range between 5 and 20 centimeter. The cable length may e.g. be in between 1 and 4 kilometer, e.g. around 2 kilometer. The cable may comprise copper, aluminium and/or other metals. The cable may be provided with an isolating cover along its length. The connectors 17 extend along the cable reel 8. The connectors 17 may be directed along an axis of rotation of the cable reel 8. E.g., the connectors may be substantially parallel to the cable reel 8.

In the embodiment of figures 1A-1C, the frame is provided with frame sides 12 at opposing sides of the frame. Thus, the frame sides 12 form mutually opposing frame sides. The cable reel is partly surrounded by the frame, i.e. by the opposing frame sides 12 and the connectors 17. More in general, the frame may partly surround the cable reel. In a two-dimensional cross section through the frame sides 12, two of the connectors 17, and the cable reel 8, the frame 6 may form a closed envelop around cable reel. Thus, in a two-dimensional cross section, the frame may completely surround the cable reel.

In the embodiment of figures 1A-1C, the front trailer part 4.1 and the back trailer part 4.2 each is provided with a vertically extending section 14. During transport, the vertically extending sections 14 face one of the frame sides 12. The frame sides 12 are provided with frame coupling elements. Each of the vertical sections are provided with trailer coupling elements that are arranged to cooperate with the frame coupling elements. For example, as illustrated in figure 1C, the vertically extending sections 14 may comprise a coupling section 14.1 provided with trailer coupling elements and, optionally, a top section 14.2 to provide for strength and/or additional possibilities of coupling the frame to the vertically extending sections 14. The frame e.g. can have a weight in the range from four to ten tonne, e.g. approximately five tonne. A total weight of the truck, trailer, frame, cable reel and high-voltage cable can be in a range from one hundred tonne to three hundred tonne, e.g. approximately two hundred tonne.

The coupling section 14.1 may e.g. be provided with the trailer coupling element 15 that comprises a locking mechanism for locking the frame to the vertically extending section 14 of the trailer. The locking mechanism may work together with a clamp provided on a frame side 12. The clamp may extend horizontally from one of the frame sides 12. The locking mechanism may further comprise a pivotable latch. The latch can only pivot away from the frame, while being pushed away by the clamp as a result of horizontal motion of the frame towards the vertically extending section 14. Thus, the locking mechanism enables horizontal motion of the frame until the frame side 12 reaches the vertically extending section 14.

The locking mechanism may be arranged, e.g. by means of a spring and/or due to its weight and dimensions, for pivoting back when the frame side reaches the vertically extending section 14 as a result of the horizontal movement. After pivoting back, the latch may locks the clamp of the frame. More in general, by means of the locking mechanism, the frame may be locked to the coupling section 14.1. Locking may be achieved by gripping of the clamp, or another projecting coupling element of the frame, by the locking mechanism. Gripping can e.g. by achieved by means of a moveable latch comprised by the locking mechanism.

In the embodiment described with reference to figures 1A-1C, the cable reel 8 provided with the high-voltage cable 10 is transported. Transport is carried out by means of the road truck 2 and the trailer 4 that includes the front trailer part 4.1 and the back trailer part 4.2. The method includes holding the cable reel 8 by means of the frame 6 that partly surrounds the cable reel 8 and that is arranged for rotational motion of the cable reel 8 relative to the frame 6. During transporting, the frame 6 connects the front trailer part 4.1 and the back trailer part 4.2 in between the front trailer part 4.1 and the back trailer part 4.2.

In the embodiment described with reference to figures 1A-1C, the method includes transporting the frame 6 to an unloading location, such as a construction site from which the cables are placed. The method may include unloading the frame 6 that holds the cable reel at the unloading location. Unloading includes decoupling the frame 6 from the front trailer part 4.1 and the back trailer part 4.2. Unloading the cable reel 6 provided with the high-voltage cable 10 from the trailer 4 has the advantage that the trailer can be reused before the cable is unwound from the cable reel.

Unloading the frame 6 also enables removal of the first trailer part 4.1 and/or the second trailer part 4.2 from the unloading location. This diminishes the area covered at the construction site from which the cable 10 is placed (e.g. in a trench in the ground). After all, when for example both the first trailer part and the second trailer part are removed by the road truck 2 after unloading, the frame 6 will occupy area at the construction site, but not the trailer parts 4.1 and 4.2. Hence, disturbance at the construction site can further be diminished.

Preferably, unloading includes lowering, i.e. moving downwards, the frame that holds the cable reel by means of equipment comprised by the truck and/or trailer. Such equipment can be integrated with the truck and/or trailer, and normally moves together with the truck and/or trailer. Preferably, the equipment comprises an hydraulic lifting system by means of which an upper part of the trailer parts 4.1 and 4.2 can be moved upwards and downwards while the trailer rests on its wheels. As a result, the frame with the cable reel and cable will move upwards and downwards as well, while being coupled to the trailer parts 4.1 and 4.2. Thus, after transporting, the equipment for lowering the frame comprised by the truck and/or trailer enables placing the frame on a support surface, such as a reinforced road surface, at the unloading location.

After unloading, the method may include unwinding the high-voltage cable from the cable reel by rotating the cable reel with respect to the frame. In order to enable unwinding, the frame both holds the cable reel, and preferably also supports the cable reel on the support surface at the unloading location, at a distance from the surface that allows rotation of the cable reel. For example, a frame that is designed for a distance of at least 10 centimeter and/or at most 20 centimeter, between a flat support surface and the cable reel and/or the cable provided on the cable reel, will generally enable unwinding at the unloading location. Alternatively, or additionally, the method includes positioning the frame on unloading support elements that are designed to keep the cable and cable reel at a distance of at least 0.1 meter and/or at most 0.2 meter, from a flat support surface.

When using the frame, the support surface can e.g. be a ground surface such as a reinforced road surface. The frame has a bottom contact surface 62 that may be, in use, after unloading of the frame from the truck and trailer, in contact with the support surface. In the embodiment of figures 1A-1C, during transporting, the frame connects the front trailer part and the back trailer part in between the front trailer part and the back trailer part. During unloading and preferably also during transport, the bottom contact surface 62 of the frame is not supported by the trailer. This enables unloading of the frame from the trailer without lifting the frame from the trailer. Instead, as the bottom contact surface 62 of the frame is free from the trailer, the frame can simply be lowered.

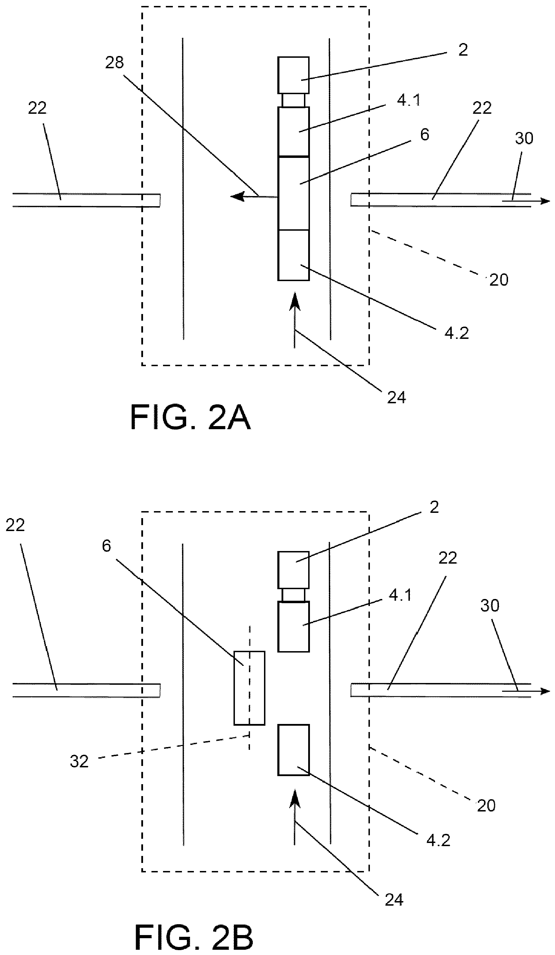

Figures 2A and 2B show a schematic representation of handling of a frame 6 holding a cable reel provided with a high-voltage cable at an unloading location 20, in an embodiment of a method according to the invention (e.g. in a variation of the embodiment described with reference to figures 1A-1C). Figures 2A and 2B show the unloading location 20 in a schematic top view. Figures 2A and 2B also schematically show, in a top view, the road truck 2, the trailer having the front trailer part 4.1 and the back trailer part 4.2, and the frame 6 holding the cable reel provided with the high-voltage cable.

Figures 2A and 2B show the trailer positioned at an unloading point, i.e. the position at which the actual unloading takes place. Thus, with the trailer positioned at the unloading point as schematically shown in figures 2A and 2B, the frame 6 can be unloaded. The unloading point as depicted in figures 2A and 2B, is near a cable receiving facility, in this example a trench 22 dimensioned for receiving one or more cables. In addition, in figures 2A and 2B there is indicated a transportation direction 24 of the trailer to reach the unloading point. In the embodiment of figures 2A and 2B, the method further includes moving the frame horizontally away from the trailer in a direction 28 that is transverse to the transportation direction 24 of the trailer to reach the unloading point at the unloading location 20. The trench 22 defines and extends in a cable path direction 30. The cable path direction 30 may be transverse to the transportation direction 24 of the trailer to reach the unloading point.

The horizontal movement 28 may e.g. be carried out by using a frame positioning system. Such a system may include a rail over which the frame can move, or may include (another) skidding system or sliding system. The force needed for the actual movement may be delivered by an hydraulic positioning equipment comprised by the frame positioning system. Such positioning equipment may deliver a pushing force or a pulling force to move the frame horizontally. Additionally, or alternatively, a skidding system or sliding system may use a flat support surface 9. The support surface may comprise a low-friction material such as teflon. Alternatively, or additionally, unloading support elements for the frame could be used that are arranged to glide with relatively low friction over the support surface. Thereto, the rail and/or support surface may e.g. have a teflon surface. Alternatively, or additionally, the horizontal movement 28 may be carried out by means of another frame positioning system.

After moving the frame sidewards, the method may further include coupling the front trailer part 4.1 to the back trailer part 4.2 and moving the truck 2 and trailer 4 in, or opposite to, the transportation direction 24 of the trailer that was followed to reach the unloading point. For example, the truck 2 and front trailer part 4.1 may first move opposite to the transportation direction 24 to enable coupling of both trailer parts to each other, and subsequently move (or, in other words, drive) in the transportation direction 24 to leave the unloading location. Alternatively, the truck may continue moving in a direction opposite to the transportation direction 24, in order to leave the unloading location after coupling both trailer parts 4.1 and 4.2.

In an embodiment, a method according to the invention (e.g. the variation of figures 2A and 2B) includes transporting an even number, such as four, of the frames to one at the same unloading location, and unloading said frames at the unloading location. As a result, at an unloading location for example two, four, six, or eight frames may be unloaded, each holding a cable reel provided with a high-voltage cable. The even number of frames, holding a cable reel provided with a high-voltage cable, may be unloaded to provide the even number of frames at the same moment in time at the unloading location. Alternatively, a frame, holding a cable reel provided with a high-voltage cable, of the even number of frames may be unloaded after another frame, holding the cable reel after unwinding of at least part of the cable, of the even number of frames has been removed from the unloading location. Thus, at one at the same moment in time, only some of the even number of frames may be present on the unloading location. Alternatively, all frames are present at the unloading location simultaneously, during a period of time.

More in general, at an unloading location, preferably a plurality of frames with reel and cable are placed. In this way, cables can be unwound into a trench in two different directions from one and the same unloading location. A method as described with reference to figures 2A-2C can especially be useful when more than one frame is to be placed at the unloading location, where the available space for manoeuvring the truck and trailer is usually relatively small and soil support can be poor. After all, the unloading according to the method described with reference to figures 2A-2C can be carried out while using relatively little extra area in addition the area already covered by the loaded truck and trailer and possibly previously unloaded frames.

During transporting, an axis of rotation of the cable reel relative to the frame may in general be along the normal driving direction 7 of the road truck and trailer. Thus, as illustrated in figures 2A-2C, at the unloading location the axis of rotation 32 of the cable reel relative to the frame may in general also be along the transportation direction 24. As a result, the axis of rotation of a cable reel may be transverse to the cable path direction 30 at the unloading point at the unloading location. Preferably, a plurality, e.g. said even number, of the cable reels that are unloaded at the one and the same unloading location, have their axes of rotation 32 in directions that are substantially parallel to each other.

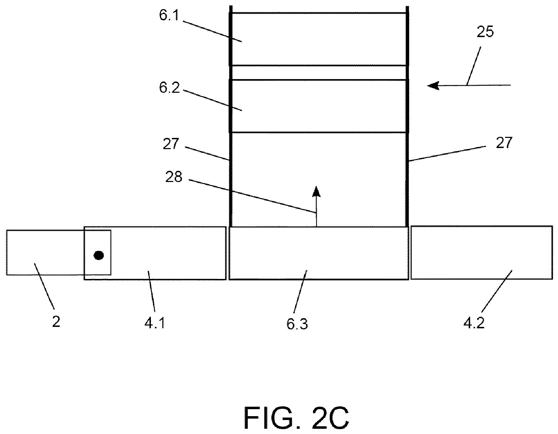

Figure 2C shows a schematic top view of a frame positioning system 25, at an unloading location. In this embodiment, the frame positioning system 25 comprises rails 27. In other embodiments, another skidding system or sliding system could be used in the positioning system 25. In the embodiment of figure 2C, the positioning system can be used to lower the frame 6.3 into contact with the rails 27. Subsequently, the frame 6.3 may be moved horizontally away from the trailer in the direction 28. The frame positioning system 25 is arranged for placement of a plurality of frames 6.1, 6.2, 6.3. Thus, in this embodiment, the frame positioning system 25 is provided for placing a plurality of frames holding a cable reel provided with a high-voltage cable at one and the same unloading location.

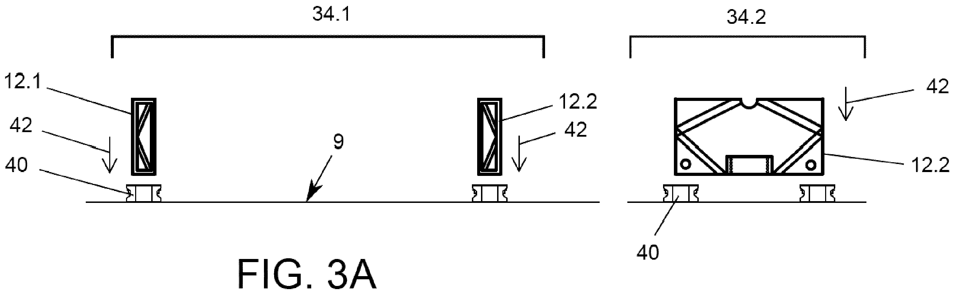

Figures 3A-3E illustrate another variation of a method according to the invention, e.g. a variation of the embodiment described with reference to figures 1A-1C. The variation includes constructing of the frame 6. Subsequent steps of the constructing are illustrated by means of figures 3A-3E. Each of figures 3A-3E shows a double side view of a frame during construction. At the left of each of figures 3A-3E, a side view of a long side 34.1 of the frame is shown during its construction. At the right of each of figures 3A-3E, a side view of a short side 34.2 of the frame is shown during its construction. In the embodiment illustrated with reference to figures 3A-3E, the frame 6 comprises, at each short side 34.2 of the frame, two frame side parts that together form one of the two frame sides 12.

The constructing may e.g. be carried out at or near a loading location of the frame holding the cable reel provided with the high-voltage cable. As will be shown in further detail below, generally a modular construction of the frame may be provided. The frame may hold a separable reel, and comprise separable frame sides, separable frame side parts and/or separable longitudinal connectors. A modular construction enables building the frame holding the cable reel at the loading location. The loading location may e.g. be a manufacturing facility of high-voltage cable. The modular construction may enable constructing the frame without needing to transport and/or lift the complete combination of reel and frame. This e.g. relaxes requirements for external lifting equipment at the manufacturing facility.

Figure 3A illustrates that the method may include providing two opposing lower frame side parts 12.1 and 12.2. The lower frame side parts are to form parts of the opposing sides 12 of the frame. The lower frame side parts 12.1 and 12.2 may be provided on loading support elements 40. The lower frame side parts 12.1 and 12.2 may be placed on top of the loading support elements 40, as indicated by arrows 42. Alternatively, the support element may be placed below the lower frame side parts, e.g. after lifting the lower frame side parts. The loading support elements 40 may be used at the loading location to prevent the cable reel touching the support surface 9 that supports the frame 6 through the loading support elements 9.

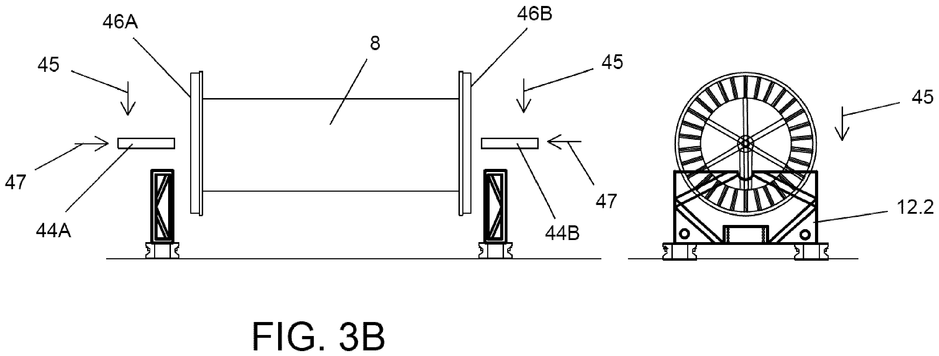

Figure 3B illustrates that the method may include providing, on the opposing frame side parts 12.1, 12.2, an axle by means of which the cable reel can rotate. Such rotation will be used for winding or unwinding the cable on the reel. In the example of figure 3B, the axle comprises two separate parts 44A, 44B that extend from the opposing sides of the cable reel 6 towards another one of the opposing frame sides, without reaching the opposing frame side. The axle parts, or, in other words, pins, may be provided into the side surfaces 46A, 46B of the cable reel 6. The pin will go into the reel (represented by arrows 47) and forms the axle around which the reel can rotate. In this embodiment, the pin is positioned in the middle of each frame side in between the two frame side parts. In another embodiment, the axle is made of one piece. Then, the axle may extend from one of the opposing frame sides 12 to reach another one of the opposing frame sides 12.

The cable reel 8 is provided in, rotatably or fixed, connection to the axle so that the axle enables rotational motion of the cable reel relative to the lower frame side parts 12.1, 12.2. In general, the axle 44A, 44B may be fixed to the cable reel or may be fixed to the frame 6. In the example of figure 3B, the axle 44A, 44B is fixed to the cable reel 8. As a result, the cable reel provided with the axle 44 may be placed on the lower frame side parts 12.1, 12.2 (said placement being indicated by arrows 45), so that the axle 44A, 44B rests on the lower frame side parts 12.1, 12.2. Bearings wherein the axle can rotate may be provided in the frame sides 12, e.g. at least in the lower frame sides 12.1, 12.2. Alternatively, or additionally, a bearing wherein the axle can rotate are provided in the cable reel 8.

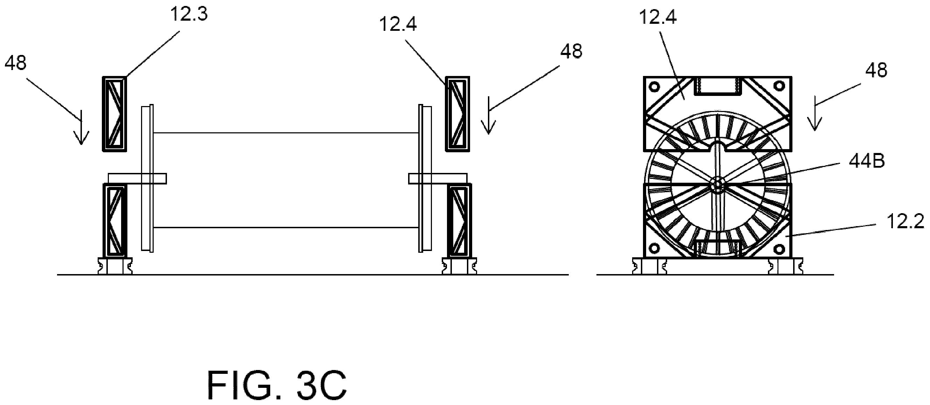

Figure 3C illustrates that the method may include providing, on top of the lower frame side parts 12.1, 12.2, upper frame side parts 12.3, 12.4 that are supported by the lower frame side parts. The upper frame side parts 12.3, 12.4 may e.g. be positioned above the lower frame side parts by means of separate lifting equipment, and subsequently be lowered (said lowering being indicated by arrows 48). Because of the modular design of the frame, so that only one upper frame side parts has to be lifted at a certain moment in time, lifting is relatively easy. This reduces the requirements to the lifting equipment used. Relatively light lifting equipment may be used, such as e.g. lifting equipment that is integrated in a building at the loading location.

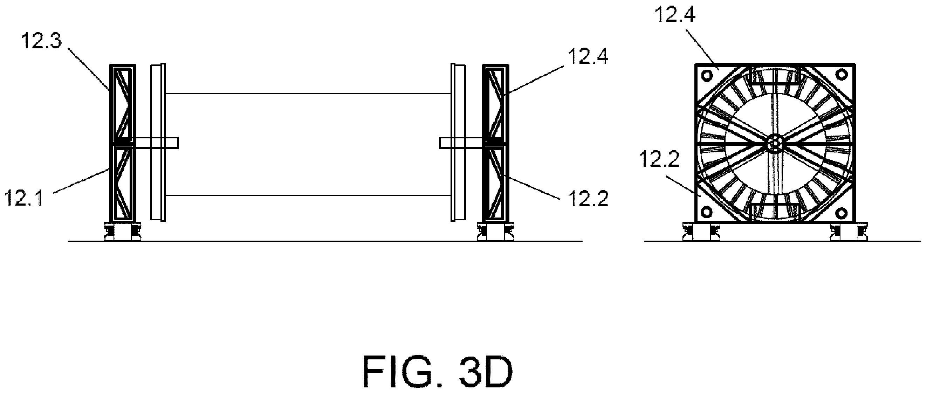

Figure 3D illustrates that the lower frame side parts 12.1, 12.2 and the upper frame side parts 12.3, 12.4 are subsequently connected, and preferably locked, together. Locking together may e.g. be carried out by means of a twist lock, by bolts and nuts, by screws, and/or in another way. Preferably, an upper frame side part forms an interlocking connection with a lower frame part side. One lower frame side part and one upper frame side part may together form one of two opposing frame sides 12. The frame sides 12 may generally have a rectangular, in particular a substantially square, shape.

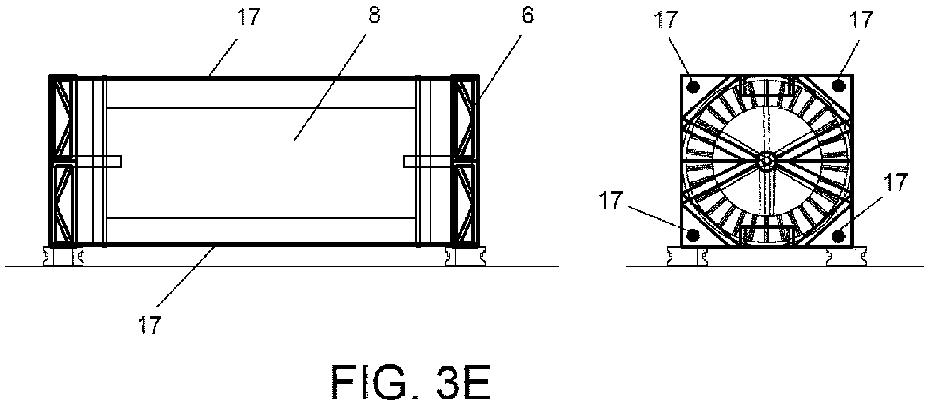

Figure 3E illustrates that the method may further include connecting the opposing frame side parts to each other by means of connectors 17 that extend along the cable reel 8. The upper frame side parts 12.3, 12.4 may be connected to each other by means of two connectors 17. These connecters may e.g. extend from upper corners parts of the upper frame side parts, as is illustrated in the side view at the short sigh (right hand picture) in figure 3E. The connectors may e.g. be made of steel. More generally, the connectors 17 may e.g. comprise a material that is sufficiently strong under both tension and pressure. Thus, near or at the four outer corners of the frame longitudinal connectors (e.g. steel bars) may be placed. The connectors are fixed to each of the four frame side parts, e.g. by means of twist-locks. The longitudinal connector bars are part of the frame and will remain connected with the other parts of the frame during loading, transport, and unloading.

In the example of figure 3E, the frame 6 holds the cable reel. The frame is arranged for rotational motion of the cable reel relative to the frame as well. After constructing, the high-voltage cable may be provided on the cable reel. Thereto, the cable reel may be rotated with the help of the axle 44A, 44B while the frame is holding the cable reel. A generally applicable driving unit that is coupled to the axle may be provided on the frame 6. By means of such a driving unit, the cable reel can be rotated in two rotational directions around the axis of rotation 32 of the cable reel. Hence, by means of the driving unit, the cable can be wound on the cable reel or can be unwound from the cable reel.

One or more steps of a method illustrated with reference to figures 3A-3E, may be carried out at a cable manufacturing facility. Thus, the frame and cable reel provided with the manufactured cable can be transported directly to the construction site. Also, the modular construction of the frame (i.e., a separable reel, connector bars, frame sides build from at least two frame side parts), enables building the frame with the cable reel at a manufacturing facility without needing to lift the complete combination of reel and frame, thus relaxing requirements for the lifting equipment at the manufacturing facility. It may be clear that e.g. as a result of the modular construction, the upper frame side parts may optionally be omitted.

It will be clear that using herein the terms lower and upper in relation to the frame side parts, is merely to distinguish both parts from each other during the constructing of the frame. For example, in some embodiments, the frame could be used in other orientations as well. After constructing the frame, the frame could e.g. be turned 90 degrees or 180 degrees, so that the original lower frame side part is besides the upper frame side part or the original lower frame side part is on top of the upper frame side part.

In an embodiment of a method of transporting the frame, e.g. the embodiment described with reference to figures 1A-1C or described with reference to figures 2A-2C, the method includes loading the frame 6 that holds the cable reel 8 in between the front trailer part and the back trailer part. A trailer similar to the trailer 4 illustrated with reference to figures 1A-1C may be used for loading. The loading includes coupling the frame to the front trailer part 4.1 and the back trailer part 4.2. The coupling preferably takes place at the same location, such as a cable manufacturing facility, wherein the high-voltage cable 10 is wound on the cable reel 8. However, alternatively, winding the cable 10 on the cable reel 8 may take place after the frame is coupled to the trailer 4, i.e. to the front trailer part 4.1 and the back trailer part 4.2 in between both trailer parts 4.1, 4.2.

Before the coupling, the frame is positioned in between the front trailer part 4.1 and the back trailer part 4.2. The coupling may include moving at least two of the frame 6, the front trailer part 4.1 and the back trail part 4.2 horizontally towards another one of the frame, the front trailer part and the back trailer part, for coupling the frame to the front trailer part and the back trailer part. Such horizontal movements may prevent the use of lifting equipment for performing the coupling. After the frame is coupled to the first trailer part 4.1 and the second trailer part 4.2, loading may further include moving the frame 6 upwards, i.e. lifting, by means of lifting equipment comprised by the truck and/or trailer. Lifting may e.g. be carried out by means of the hydraulic system for lifting and lowering the frame holding a cable reel provided with a high-voltage cable.

Thus, more in general, the trailer may be provided with two trailer parts that are vertically moveable, e.g. by means of a hydraulic system provided in the truck and/or trailer. By means of the hydraulic system or other lifting equipment, the frame may be lifted to a transport position of the frame. The trailer parts can be coupled to the frame before lifting. The frame can be lifted by the trailer parts after coupling the frame to the trailer parts when the latter are in a low position. The frame can thus be coupled to the trailer while the trailer is in a low position. With the frame in the transport position, after lifting, the truck and trailer can transport the frame holding the cable reel, provided with a high-voltage cable.

The frame and trailer can e.g. be coupled to each other by means of a bolt and nut connection. Thereto, both the frame coupling element and the trailer transport element may comprise a hole for receiving the bolt. Other ways of coupling the frame to the trailer parts are also possible, e.g. as described with reference to figure 1C. After coupling, the frame with reel and cable is lifted by means of the hydraulic system that moves the trailer parts and frame upwards to a transport position of the frame. The frame with reel and cable can subsequently be transported, while the frame stays coupled to the trailer parts. In this way, the frame with reel and cable can be transported without the need for heavy external lifting equipment (i.e. heavy lifting equipment not being provided on the truck and/or trailer) such as a crane at the loading location. Thus, the frame allows for heavy weight cable reels or drums to be loaded to a truck-trailer combination without the need for external lifting equipment. Arrived at an unloading location, the loading operation may be reversed. The trailer lowers the frame with the reel and cable, after which the frame is decoupled from the trailer parts.

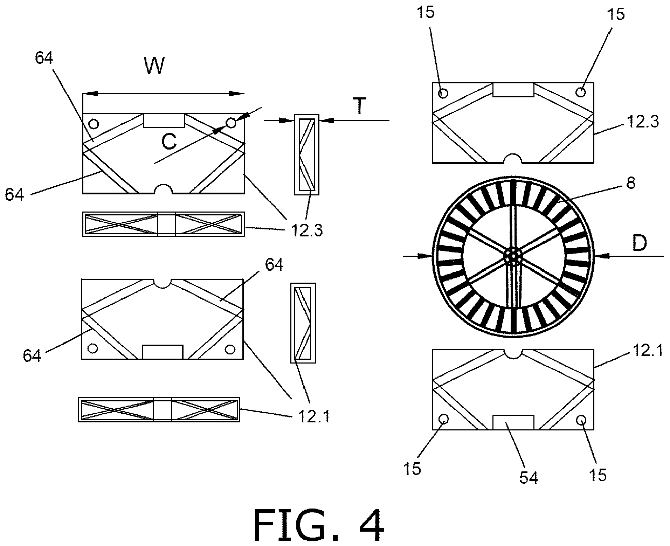

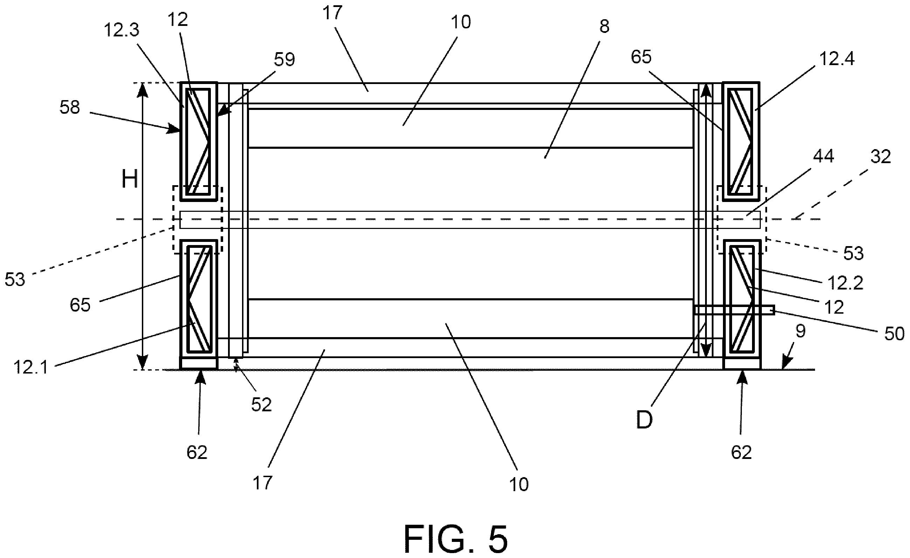

Figure 4 shows a schematic side view of a cable reel 8 and a view, in three different directions, of an upper frame side part 12.3 and a lower frame side part 12.1. Figure 5 shows a schematic transparent side view of the frame 6 and the cable reel 8 provided with the high-voltage cable 10. An embodiment of the frame will be described with reference to figures 4 and 5. A frame in an embodiment described with reference to figures 4 and 5, may e.g. be used in a method described with reference to figures 1A-1C and/or figures 2A-2C.

According to figures 4 and 5, a frame is provided that holds a cable reel 8 that is arranged to be provided with a high-voltage electrical cable 10. By rotating the cable reel 8, the cable 10 can be wound on, or unwound from, the cable reel 8. In this embodiment of the frame 6, the frame is provided with the axle 44 that enables the rotation of the cable reel 8 relative to the frame 6. The axle 44 is directed from one of the opposing frame sides 12 towards another one of the opposing frame sides 12. In this embodiment, the axle 44 is made of one part and reaches the opposing frame side 12. Each of the opposing sides 12 of the frame 6 has an upper frame side part 12.3, 12.4 and has a lower frame side part 12.1, 12.2 that, in use, supports the upper frame side part. The axle 44 rests in or on the lower frame side part in between the upper frame side part and the lower frame side part.

The connectors 17 connect the opposing frame side parts 12 to each other. The connectors 17 extend along an axis of rotation 32 of the cable reel 8. Holes 15 may be provided in the frame sides 12, preferably near corners of the frame sides 12, to accommodate the connectors 17 and to securely fix the connectors 17 to the frame sides 12. The connectors 12 may extend through the frame sides 12. The connectors 17 preferably do not extend out of the frame sides 12. Thus, preferably, the connectors 17 do not project out of the outer side face 58 of the frame sides 12.

The axle 44 may be provided in a central portion 53, such as a center, of the opposing frame sides 12. In combination with the frame sides 12 having a rectangular, in particular a square, shape, this enables using the frame in different orientations. For example, if the frame sides have a rectangular shape and the axle 44 is provided in the center, the frame can be used after being turned over 180 degrees. Preferably, as illustrated in figure 5, the frame extends below the cable reel and below the cable provided on the cable reel.

Each lower frame side part 12.1, 12.2 of the frame may be provided with a bottom recess 54. This enables transporting the frame over a rail. The rail, or another skidding or sliding system for horizontally moving the frame (described with reference to figures 2A-2C), can be provided at the loading locating or at the unloading location. It enables storing a plurality of frames 6 at a relatively small storage area, as one and the same unloading point can be used for manoeuvring a truck and trailer transporting each frame of a plurality of frames 6. Before loading or after unloading, the frame can be moved over the rails towards or away from the trailer 4.

The frame may generally be provided with one or more locks for preventing rotation, in order to ensure that the reel will not rotate during transport. Unwinding is to be carried out at the unloading location, not during transport. Thus, the cable reel 8 can be connected to the frame 6 by means of the axle 44 and the one or more locks. A schematic representation of such a lock is shown in figure 5 with reference number 50. The lock may include a bar that engages both the frame 6 and the cable reel 8, thus preventing rotation. Other types of locks may be used as well.

The frame may be arranged for supporting the cable reel by extending below the cable reel and below the cable provided on the cable reel. Thus, a distance 52 may be provided between the support surface 9 on which the frame rests, and the cable reel and cable provided on it. As a result, the frame can support the cable reel on the surface 9 (e.g. a ground surface at a construction site). The frame may have a bottom contact surface 62 that may, in use, after unloading of the frame from the truck and trailer, be in contact with the support surface 9 that supports the frame after unloading. Such a support surface 9 can e.g. be formed by a reinforced road surface at an unloading location, such as a construction site.

The cable reel 8 and the cable are provided on the cable reel at a distance from the surface, in order to allow rotation of the cable reel relative to the frame supporting the cable reel. For example, a frame that is designed for a distance 52 of at least 0.1 meter, preferably approximately 15 centimeter, between a flat support surface 9 and the cable reel and cable, will enable unwinding at the unloading location also on somewhat irregular surfaces. Then, the use of unloading support elements could be omitted. Alternatively, the frame may extend downwards to a similar height as the cable reel and/or the cable provided on the cable reel. Support elements can be used to establish said distance to the support surface 9.

Alternatively, or additionally, unloading support elements can be used to realise, or increase, the distance with the ground surface. Such unloading support element may be similar to the loading support elements that are drawn in for example figure 3A with reference number 40. Thus, apart from constructing the frame, the loading support elements 40 may also be used at the unloading location as unloading support elements. The loading support elements 40 may be used to keep the frame from the ground surface, thus increasing a distance between the frame, cable reel and cable on the one hand, and the ground surface on the other hand.

The frame may extend upwards to a similar height as the cable reel and/or the cable provided on the cable reel, as schematically shown in e.g. figure 5. Thus, the frame sides 12 may extend vertically to a similar height as the cable reel provided with a high-voltage cable. In this option, some of the connectors and/or part of the frame coupling elements may be provided near, e.g. at a similar height as, an upper part (e.g. the upper 25%) of the cable reel provided with the high-voltage cable. Having a relatively high, i.e. relatively far removed from the support surface 9, mechanical connection between the frame and the vertically extending sections 14 of the trailer parts 4.1, 4.2, enables a relatively stable mechanical connection between the frame and the trailer parts, in particular when combined with a lower connection established by additional coupling elements. Also, having a relatively high connectors 17 enables a relatively strong frame.

In an embodiment according to figures 4 and 5, the frame partly surrounds the cable reel. In particular, the side parts 12 and the connectors 17 partly surround the cable reel. This is accomplished by the frame sides 12 vertically extending to the same height as the cable and cable reel, and extending below the reel and cable wound thereon. In order to improve the stability of the construction, the frame preferably surrounds the reel with the cable wound thereon. Preferably, the vertically extending sections of the trailer parts match the height of the frame sides. This is for example shown in figures 1A-1C.

An outer diameter D of the cable reel may be in a range from three to six meter, e.g. be approximately 4.5 meter. A width W of the frame sides 12 may be approximately equal to the outer diameter D of the cable reel. A height H of the frame preferably is larger than an outer diameter of the cable reel. Preferably, the height H exceeds the outer diameter D of the cable reel with at least 0.1 meter, more preferably approximately 15 centimeter. A thickness T of the frame sides may be in a range between 0.5 an 1 meter, and preferably is about 0.7 meter. The connectors 17 may have a circular diameter. The connectors 17 may have an outer diameter C in a range from 20 to 40 centimeter, e.g. approximately 25 centimeter.

The frame sides 12, in particular the lower and upper frame side parts 12.1, 12.2, 12.3, 12.4, may comprise a (preferably substantially rectangular) outer band 63 that is reinforced by a plurality of cross bars 64. The cross bars connect different portions of an outer band in mutually different directions. In this way, a strong and relatively light structure can be obtained. At the outer side surface 58, and/or at an inner side surface 59, the frame sides 12, in particular the frame side parts 12.1, 12.2, 12.3, 12.4, may be covered by a plate 65, e.g. a steel plate. A distance between the outer side surfaces 58 of the frame sides 12 may e.g. be in a range between six meter and ten meter, e.g. approximately eight meter.

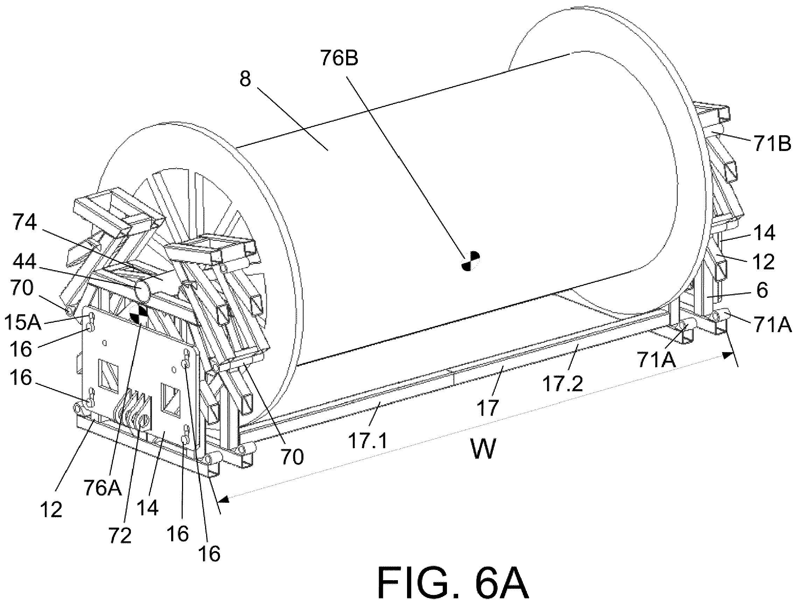

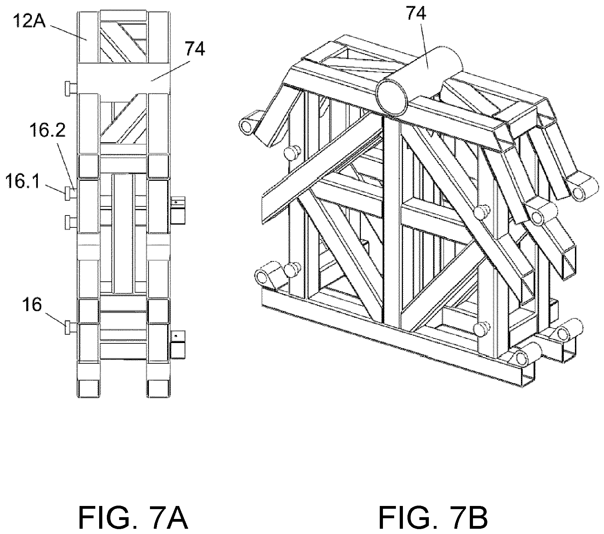

Figures 6A-6C and 7A-7C illustrate a frame 6 in a further embodiment of the invention. The frame is arranged for being transported by means of a road truck and trailer that includes a front trailer part and a back trailer part. The frame holds a cable reel 8 that is arranged to be provided with a high-voltage cable. The frame is provided with opposing frame sides 12 and with connectors 17 that extend along the cable reel and connect the opposing frame sides 12 to each other. The frame 6 is arranged for rotational motion of the cable reel 8 relative to the frame 6. The frame sides 12 are each provided with one or more, in this further embodiment preferably four, frame coupling elements 16 that are arranged to be coupled to the front trailer part or the back trailer part and to connect the front trailer part to the back trailer part, so that the road truck can transport the frame 6 in between the front trailer part and the back trailer part. It may thus be clear that, during transport of the frame 6, the frame forms a mechanical connection between the front trailer part and the back trailer part. Thus, more in general, during transport of the frame 6, the frame mechanically connects the front trailer part to the back trailer part.

At least part of the frame coupling elements 16 may extend horizontally from at least one of the frame sides 12, so that the at least part of the frame coupling elements is arranged for connecting the frame to the front trailer part and/or the back trailer part by horizontal motion. Both frame sides 12 may be provided with such horizontally extending frame coupling elements 16. The front trailer part and the back trailer part may be provided with vertically extending sections 14. During transport, the vertically extending sections 14 may each face one of the frame sides 12. Each of the vertical sections may be provided with one or more, in this further embodiment preferably four, trailer coupling elements that are arranged, in particular shaped, to cooperate with the frame coupling elements 16.

As illustrated in more detail in figures 7A-7C, the frame coupling elements 16 may have an end portion 16.1 and a base portion 16.2. The end portion 16.1 may have, compared to a base portion 16.2 of the frame coupling elements, an increased size at least in a thickness direction of the frame coupling elements 16. Such a thickness direction may be transverse, e.g. perpendicular, to a direction in which the frame coupling elements, in use, project horizontally (such a projection direction may, during transport of the frame, be substantially aligned with the normal driving direction). The thickness direction may be substantially horizontal. Said increased size may enable locking the frame coupling elements 16 to cavities, preferably apertures 15A, in the vertically extending sections 14 with which the front trailer part and the back trailer part are provided. Said apertures 15A and their surrounding structures, preferably portions of the vertically extensions 14 that surround the apertures 15A, may form the trailer coupling elements 15.

The trailer coupling elements may be arranged for coupling with the frame coupling elements. The apertures 15A may have a size in a direction along the vertically extending section (which direction may correspond with the thickness direction when the frame is mechanically coupled to the front trailer part and/or to the back trailer part) that varies. An aperture may e.g. be formed by at least two overlapping (or otherwise connected) openings, wherein one opening is positioned above another opening. Centres of said openings may be substantially vertically aligned. For example, as illustrated in figures 6A-6C, said openings may be substantially circular. More in general, the apertures may have a decreasing aperture size near a lower portion of the apertures. For example, a lower portion of the apertures may be substantially V-shaped or rounded.

An aperture size of an aperture may be larger than the increased size of an end portion 16.1, when measured in the thickness direction in a middle portion or upper portion of the aperture. As a result, the end portion 16.1 may protrude through the aperture 15A in said middle portion or upper portion. With the horizontally projecting frame coupling elements, such protrusion may be achieved by horizontal motion of the frame and/or one of the front trailer part and the back trailer part. Said aperture size may be smaller than the increased size of the end portion 16.1, when measured in the thickness direction in a lower portion of the aperture. As a result, the frame coupling element 16 can be locked in the aperture 15A by means of the end portion 16.1. Such locking may e.g. be achieved by lowering the frame 6 which one or more end portions protruding through one ore more apertures. After such lowering, the lock may be maintained by gravity, with the projecting portion locked into the lower portion of the aperture.

After the frame has reached a support surface or unloading support element, i.e. is supporting the cable reel, the vertically extending sections may be moved vertically upwards, e.g. by moving the trailer parts upwards. In this way, the frame coupling element may be unlocked from the aperture. This may enable horizontal motion of the trailer parts with respect to the frame, when the frame coupling elements 16 are positioned in a middle portion or an upper portion of the apertures. Thus, more in general, decoupling the frame from the front trailer part and the back trailer part during unloading of the frame, may include moving the trailer coupling elements upwards and, preferably, subsequently horizontally away from the frame coupling elements.

The frame 6 and/or the cable reel 8 may be provided with an axle 44 that enables rotation of the cable reel relative to the frame 6. The axle 44 may be directed from one of the opposing frame sides 12 towards another one of the opposing frame sides 12. The axle may rest in and/or on the lower frame side parts 12, e.g. may be received by an axle holder 74. The frame 6 may be arranged for supporting the cable reel 8 by extending below the cable reel and/or below the cable provided on the cable reel. As a result, the frame can support the cable reel on a support surface with the cable reel 8 and the cable being provided on the cable reel at a distance from the support surface, in order to allow rotation of the cable reel relative to the frame 6 supporting the cable reel 8.

In said further embodiment illustrated in figures 6A-7C, both the opposing frame sides may have a base portion 12A and two support portions 12B. The support portions 12B may be pivotable with respect to the base portion. Thus, the support portions of a frame side may be moveably connected the base portion, in this embodiment via pivotable connections 70. In the further embodiment, the base portions 12A of the frame sides 12 may be provided with the frame coupling elements 16. The connectors 17 may connect the base portion 12A of each of the opposing frame sides to the other one of the opposing frame sides 12. In the further embodiment, the frame may includes at most two connectors. This enables a relatively light frame. Preferably, during transporting of the frame, at least one frame coupling element 16 may be generally positioned at an approximately similar, in particular the same, height as the at most two connectors 17. This may be benefical in view of tensile forces exerted on the frame during transport.

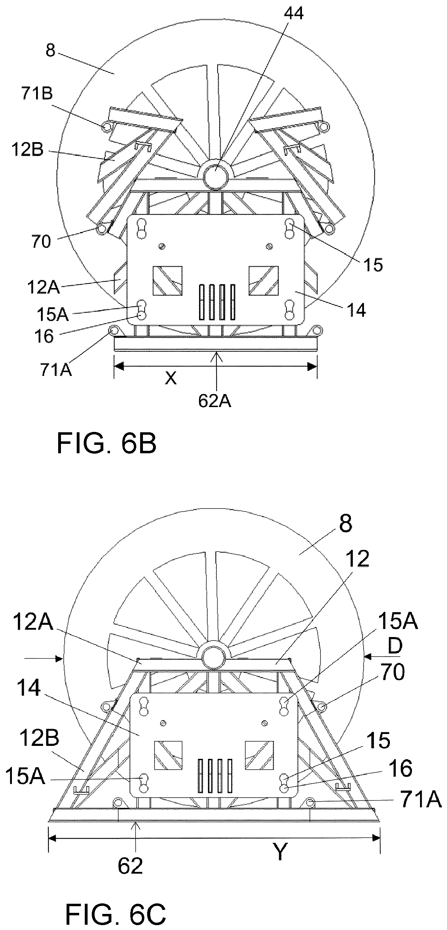

Preferably, the support portions 12B are moveable from a retracted position for transporting the frame, to a support position for supporting the frame. Figures 6A and 6B show the support portions 12A in a retracted position. Figure 6C shows the support portions 12B in a support position, during lowering of the frame in between the front trailer part and the back trailer part. The frame 6 may be providing with locking elements 71A, 71B for locking the support portions 12B in their support position. Preferably, in the retracted position, the support portions, and preferably also the whole of the frame sides, do not extend laterally further than the cable reel 8 (laterally means transverse to, in particular substantially perpendicular to, the normal driving direction 7 that may be aligned with a direction in which the connectors 17 extend and/or the axle 44 extends). Such limited lateral extension of the support portions and the frame sides in the retracted position is illustrated in figure 6B. This may facilitate transport of the cable reel, as it generally will be more easy to pass road obstacles such as traffic lights, road signs, concrete structures etc. In the support position however, the support portions preferably extend laterally further than the cable reel. Such extension facilitates a more stable support of the cable reel 8 by the frame 6. Thus, the moveable support portions may enable that a lateral extension of the frame during transporting is less than during supporting.

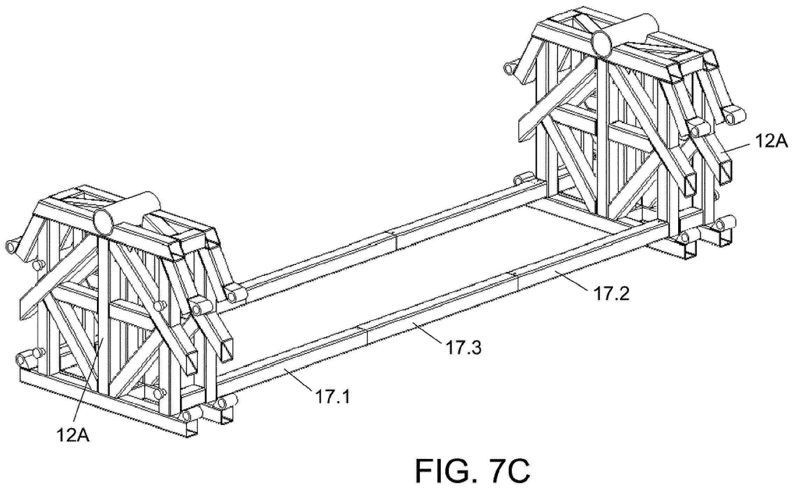

A frame length W (indicated in figure 6A) of the frame may be in a range from 8 meter to 15 meter, e.g. approximately 9.5 meter or approximately 12 meter. The connectors 17 may generally be adjustable so that a length of the connectors can be adjusted, e.g. can be increased or can be decreased. This may enable sizing the frame, e.g. in view of an amount of cable needed, the size of the cable reel, and/or obstacles for transportation. The connectors may comprise two separable parts 17.1, 17.2, so that a further connector part 17.3 can be connected to said parts. Figure 7C shows connectors 17 with an extended length, comprising a connector part 17.3 in between parts 17.1 and 17.2. Mechanical connections between connector parts 17.1, 17.2 and/or 17.3 may be designed to withstand the compressive and tensile forces that may occur during transport and other use of the frame 6.

In an embodiment of a method or a use according to the invention, the frame may be transported with the support portions 12B in a retracted position. The method may include moving the support portions 12B relative to a base portion 12A, preferably at the unloading location. The support portions 12B may be moved from the retracted position of the support portions for transporting the frame, to the support positions of the support portions for supporting the frame. Such movement preferably takes place after transport and/or before or during unloading, more preferably before decoupling. As a result, of the movement of the support portions, a lateral extent of the frame may be increased. Preferably, the support portions are moved before a bottom contact surface of the frame is in contact with a support surface or unloading support element. This may facilitate said movement as well as improve support directly after said contact is established. Thus, after transporting and unloading, the cable reel 8 may be supported by means of the frame with the support portions in a support position. Supporting the frame after transporting by means of such a moveable, preferably pivotable, support portion 12B, enables improving dimensions of the frame 6 during transporting and during supporting. In particular, a lateral extension of the frame during transporting with the support portions in the retracted position, may be less than during supporting with the support portions in the support position.

As indicated in figures 6B and 6C, a lateral extent X of a bottom contact surface 62 of the base portion 12A may be in a range from 2 meter to 4.5 meter, e.g. approximately 2.8 meter. A lateral extend Y, of the bottom contact surface 62A of the base portion 12A and the one or more support portions 12B (in the support position) together, may be in a range from 3.5 meter to 6 meter, e.g. approximately 4.8 meter. An outer diameter D (indicated in figure 6C) of the cable reel may be in a range from three to six meter, e.g. be approximately 4.5 meter (such as 4.3 meter). The vertically extending sections 14 may be provided with attachment elements 72 for attaching the vertically extending section 14 to the front trailer part or the back trailer part. A frame centre of gravity 76A may generally be positioned higher than a cable reel centre of gravity 76B. The frame may be designed to have the frame centre of gravity higher than the cable reel centre of gravity during transport and/or during supporting after unloading of the frame. This may be the case with or without the cable provided on the cable reel.

The embodiments described with reference to the figures, illustrate various features. Features described for an embodiment, may be combined with features of another embodiment. The invention is not limited to the embodiments described with reference to the figures, and may be embodied in other ways as well.

## Claims

1. Method of transporting a cable reel provided with a high-voltage cable, the method including:
- holding the cable reel by means of a frame that is arranged for rotational motion of the cable reel relative to the frame; and
- by means of a road truck and trailer that includes a front trailer part and a back trailer part, transporting the frame that holds the cable reel;
wherein, during transporting, the frame is coupled to the trailer so that it connects the front trailer part to the back trailer part in between the front trailer part and the back trailer part.

2. Method according to claim 1, including, after transporting the frame to an unloading location:
- unloading the frame that holds the cable reel at the unloading location, wherein unloading includes decoupling the frame from the front trailer part and the back trailer part;
wherein unloading includes:
- lowering, in between the front trailer part and the back trailer part, the frame that holds the cable reel by means of equipment comprised by the truck and/or trailer.

3. Method according to claim 2, including:
- moving the frame horizontally away from the trailer in a direction that is transverse to a transportation direction of the trailer to reach an unloading point at the unloading location; and
- subsequently, coupling the front trailer part to the back trailer part and moving the truck and trailer in, or opposite to, the transportation direction of the trailer to reach the unloading point.

4. Method according to claim 3, wherein the unloading point is near a cable receiving facility, such as a trench, that extends in a cable path direction that is transverse to the transportation direction of the trailer to reach the unloading point.

5. Method according to one of claims 2-4, including transporting an even number, such as four, of the frames to one and the same unloading location, and unloading said frames at the unloading location.

6. Method according to one of claims 1-5 that includes constructing of the frame, the constructing including:
- providing two opposing lower frame side parts in order to form parts of opposing sides of the frame;
- providing, on or in the opposing lower frame side parts, an axle that is directed from one of the opposing lower frame side parts towards another one of the opposing lower frame side parts;
- providing the cable reel in connection to the axle so that the axle enables rotational motion of the cable reel relative to the frame side parts; and
- connecting the opposing frame side parts to each other by means of connectors that extend along the cable reel.

7. Method according to one of claims 1-6, including:
- providing the high-voltage cable on the cable reel by rotating the cable reel with respect to the frame while the frame is holding the cable reel.

8. Method according to one of claims 1-7, including:
- loading the frame that holds the cable reel in between the front trailer part and the back trailer part, wherein loading includes coupling the frame to the front trailer part and the back trailer part;
wherein, with the frame positioned in between the front trailer part and the back trailer part, coupling includes:
- moving at least two of the frame, the front trailer part and the back trailer part horizontally towards another one of the frame, the front trailer part and the back trailer part, for coupling the frame to the front trailer part and the back trailer part.

9. Frame arranged for being transported by means of a road truck and trailer that includes a front trailer part and a back trailer part, the frame holding a cable reel that is arranged to be provided with, and preferably is provided with, a high-voltage cable, the frame being provided with opposing frame sides and with connectors that extend along the cable reel and connect the opposing frame sides to each other, wherein the frame is arranged for rotational motion of the cable reel relative to the frame and wherein the frame sides are each provided with frame coupling elements that are arranged to be coupled to the front trailer part or the back trailer part and to connect the front trailer part to the back trailer part, so that the road truck can transport the frame in between the front trailer part and the back trailer part.

10. Frame according to claim 9, wherein the frame and/or the cable reel is provided with an axle that enables the rotation of the cable reel relative to the frame, the axle being directed from one of the opposing frame sides towards another one of the opposing frame sides.

11. Frame according to claim 9 or 10, wherein the frame is arranged for supporting the cable reel by extending below the cable reel and/or below the cable provided on the cable reel, so that the frame can support the cable reel on a support surface with the cable reel and the cable being provided on the cable reel at a distance from the support surface, in order to allow rotation of the cable reel relative to the frame supporting the cable reel.

12. Frame according to one of claims 9-11, wherein at least part of the frame coupling elements extends horizontally from at least one of the frame sides, so that the at least part of the frame coupling elements is arranged for connecting the frame to the front trailer part and/or the back trailer part by horizontal motion.

13. Frame according to one of claims 9-12, wherein at least one of the opposing frame sides has a base portion and has at least one support portion that is moveable with respect to the base portion, from a retracted position of the at least one support portion for transporting the frame, to a support position of the at least one support portion for supporting the frame, wherein the connectors connect the base portion to the opposing frame side.

14. Assembly of a frame according to one of claims 9-13, and the road truck and trailer, wherein the front trailer part and/or the back trailer part is provided with a vertically extending section that, during transport, faces one of the frame sides, the vertical section being provided with trailer coupling elements that are arranged to cooperate with the frame coupling elements.

15. Use of a frame according to one of claims 9-14 in a method according to one of claims 1-8.
